(19) Europäisches Patentamt
European Patent Office
Office européen des brevets

(11) **EP 4 001 850 B1**

(12) **EUROPEAN PATENT SPECIFICATION**

(45) Date of publication and mention of the grant of the patent:
**29.11.2023 Bulletin 2023/48**

(21) Application number: **21195294.0**

(22) Date of filing: **07.09.2021**

(51) International Patent Classification (IPC):
**G01C 25/00** (2006.01)

(52) Cooperative Patent Classification (CPC):
**G01C 25/005**

(54) **RIGHT AND LEFT MULTIPLICATIVE ATTITUDE MATCHING TRANSFER OF ALIGNMENT**

MULTIPLIKATIVE ANPASSUNG DER RECHTEN UND LINKEN LAGE FÜR AUSRICHTUNGSTRANSFER

TRANSFERT DE CORRESPONDANCE D'ALIGNEMENT D'ATTITUDES MULTIPLICATIVES DROITE ET GAUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2020 US 202017097856**

(43) Date of publication of application:
**25.05.2022 Bulletin 2022/21**

(73) Proprietor: **L3Harris Technologies, Inc.**
**Melbourne, FL 32919 (US)**

(72) Inventors:
• **Lyon, Scott M.**
**South Weber, 84405 (US)**
• **Lawton, Jonathan R.**
**Provo, 84604 (US)**
• **Ghori, Mohammad R.**
**Edison, 08820 (US)**

(74) Representative: **Schmidt, Steffen J.**
**Wuesthoff & Wuesthoff**
**Patentanwälte PartG mbB**
**Schweigerstrasse 2**
**81541 München (DE)**

(56) References cited:
**EP-A1- 2 927 744      EP-A2- 2 378 248**
**CN-A- 109 443 385      US-A- 5 527 003**

**Description**

BACKGROUND

Background and Relevant Art

In aviation and communication technologies, there is often a need to have a dedicated antenna reference unit (ARU) with respect to airborne equipment (or other mobile equipment, including land or sea equipment). For example, the airborne equipment may include a pedestal having an antenna or other narrow beam equipment configured to transmit and/or receive signals to and from a remote target, such as an aircraft, satellite or ground station. It is also desirable to slave the ARU to the INS in such a way that the ARU will on average match the motion of the INS but it will be aligned to the antenna and it will reflect the fast dynamics experienced by the antenna which can be different than that seen by the INS due to bending between the ARU and the INS. In addition the alignment of the ARU to the INS is costly and can take considerable time.

To accomplish this attitude matching, and for other reasons such as navigation, the ARU equipment will typically include an inertial measurement unit (IMU). The ARU could be mounted at the base of the antenna pedestal or it could be mounted attached to the antenna reflector. The ARU further includes computing hardware and software to compute attitude for the antenna.

Document EP 2 927 744 discloses an image capture system that comprises an image capture device driven by a motor to a desired angle. A gyro senses a rate and a system senses an angle of the image capture device relative to a surface. A control removes a gyro bias error estimated by the system in real time for correcting a position of the image capture device.

An IMU is an electronic device that outputs measured body rates such as acceleration rates, angular rates etc. This is able to be performed inasmuch as the IMU includes equipment such as various accelerometers, gyroscopes, and/or magnetometers. This allows for outputting rotation rates for roll, pitch, and heading of the platform. The traditional mechanical IMU's have been mostly replaced by modern IMU's that are open to an array of options from the high end fiber optic gyro and ring laser systems to very simple and low cost microelectromechanical systems (MEMS) based solutions. The MEMS based technology currently has less stability than other more expensive systems, but comes at a significantly lower cost. For example, the accelerometers and gyroscopes used in modern IMUs rarely exceed tactical grade levels. As such, there can be significant amounts of bias in the output rotation rates that can be destructive to high accuracy antenna pointing. For example, a measured body rotation rate may drift by an amount of 0.1° per minute (as a turn on to turn on stability for a tactical grade MEMS IMU). As can be imagined, when the output of the IMU is integrated over time, the result is a significant absolute position drift.

A high end INS contains an IMU that is typically in the navigation grade category. The INS includes accelerometers and gyroscopes (and often other sensors including a GPS, a barometer, etc.). The higher grade equipment in an INS allows integration over a significant amount of time and then coupled with other sensors, that integrated attitude can be compared with the accelerometers which determine which orientation is down. In addition, the earth rate can be sensed and in combination with position from a GPS, the heading of the platform can be determined. An INS includes computing hardware and software that allows the INS to output actual three-dimensional velocities and three-dimensional angles including actual roll, pitch and heading, and system position on the earth in all three axes. Thus, while an IMU will output changes in velocity and changes in angular motion, the INS outputs actual velocities and navigation grade (sometimes treated as absolute) positional angles. Taken together, the positional angles are referred to as attitude.

Thus, systems may use an IMU mounted on a mobile platform to attempt to orient the ARU to match the attitude of the INS dedicated for platform navigation.

This can be a difficult process for a variety of different reasons. For example, as discussed previously, the IMU has a bias in rotation rate associated with it. Further, at initialization, the IMU and INS will not have a matching attitude, which needs to be accounted for and compensated out of the algorithms. Additionally, mounting the IMU to the platform and mounting the navigation dedicated INS is done differently each time it is performed. That is, there can be variations in how IMUs are mounted to different pieces of the platform and variations in how different INS units are mounted. Thus, there are inherent attitude differences simply based on how mounting is performed of IMUs and navigation systems.

The subject matter claimed herein is not limited to embodiments that solve any disadvantages or that operate only in environments such as those described above. Rather, this background is only provided to illustrate one exemplary technology area where some embodiments described herein may be practiced.

BRIEF SUMMARY

One embodiment illustrated herein includes a method of matching attitude of an IMU mounted on antenna equipment, as part of an ARU, with attitude of an INS mounted some distance away on a different part of the aircraft or other mobile platform. The method includes receiving measured body rotation rates from an IMU serving as a portion of a dedicated ARU. The method further includes receiving measured orientations from the INS. The method further includes estimating a rotation rate bias of one or more of the body rotation rates by using differences over time between a change in orientation of the IMU determined by integrating the measured body rotation rates and using the integrated measured body rotation rates over time; and a change in orientation of the INS determined using the measured orientations over time. The method further includes compensating for the estimated rotation rate bias. The method further includes from the orientation of the IMU determined from the measured body rotation rates and the measured orientations of the INS, determining attitude mismatching caused by initial condition mismatching and attitude mismatching caused by issues related to mounting the IMU and mounting the INS. The method further includes compensating for the attitude mismatching. The method further includes slaving the IMU attitude to the INS.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention may be realized and obtained by means of the instruments and combinations particularly pointed out in the appended claims. Features of the present invention will become more fully apparent from the following description and appended claims, or may be learned by the practice of the invention as set forth hereinafter.

BRIEF DESCRIPTION OF THE DRAWINGS

In order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not therefore to be considered to be limiting in scope, embodiments will be described and explained with additional specificity and detail through the use of the accompanying drawings in which:

Figure 1 illustrates an IMU and INS located on a mobile platform.;
Figure 2 illustrates a system for attitude matching a dedicated antenna reference unit embodied by a mounted IMU with a dedicated platform INS; and
Figure 3 illustrates a method of matching attitude of an IMU with attitude of an INS.

DETAILED DESCRIPTION

Embodiments illustrated herein are able to orient a dedicated ARU having an IMU to a platform INS by compensating for various issues including IMU rotation rate bias, initial attitude differences, and mounting differences. That is, embodiments can receive as input measured body rotation rates from an IMU, and INS attitude information. Using this information, embodiments can compensate for rotation rate bias of the IMU. Additionally, embodiments can compensate for differences in initial attitude between the IMU mounted on the airborne antenna equipment and the aircraft (or other mobile platform) dedicated INS. Further, embodiments can compensate for mounting differences between IMUs and INSs. This approach can be implemented in some embodiments using only the attitude information while excluding coordinating the accelerometers, as is commonly done in other systems. Thus, some embodiments herein can perform attitude matching by using only the measured attitudes, while specifically excluding matching by coordinating accelerometers in IMUs and INS.

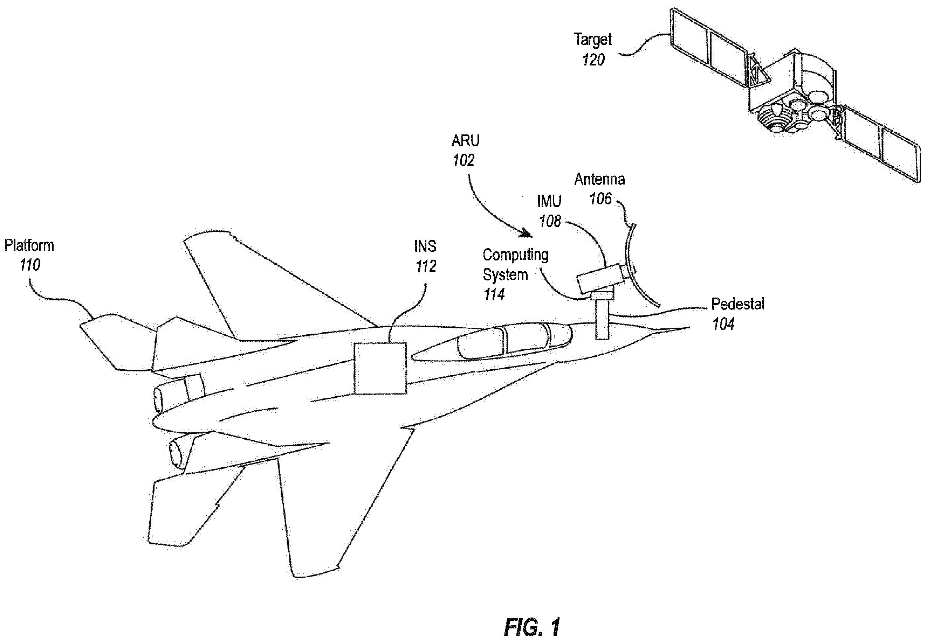

Referring now to Figure 1, an example is illustrated. Figure 1 illustrates an environment 100. ARU 102 includes an IMU 108 coupled to a computing system 114 for performing various computations and corrections. The IMU 108 is coupled to a pedestal 104 directly or coupled to an antenna 106 such that the IMU is able to be tilted in 3 dimensions.

As noted previously, the IMU 108 is able to output the rotation rate at which tilting occurs in the various axes. That is, the IMU 108 is able to output angular changes in X, Y, and Z axes. Note that while X, Y, and Z axes are used here in this example, it should be appreciated that other coordinate systems may be used, in addition or alternatively.

Figure 1 further illustrates a dedicated platform INS 112 which in this case is an aircraft INS. The INS 112 has an attitude that is dependent on an attitude of the mobile platform 110. Further, the INS 112 is able to output actual, navigation grade angle angular positioning including angular positioning corresponding to roll pitch, and heading (or yaw). The information regarding attitude output by the INS 112 corresponds to the attitude of the platform 110 as the INS 112 is typically statically mounted to the platform 110.

In the example illustrated in Figure 1, it is desirable to cause the attitude of antenna 106 (as indicated by the IMU 108) to match the attitude of the platform 110. This can be done, for example, to implement a bore site from the antenna 106 to a target 120, where the target may be a satellite, aircraft, ground equipment, or other platform having communication hardware.

As noted previously, the IMU 108 may be implemented using gyroscopes and accelerometers which are of a lower grade, such that the IMU 108 has a rotation rate bias. Thus, for example, the IMU 108 may output a rotation bias that is 0.1° per minute (or some other value) higher than the actual rotation rate of change of the IMU 108 as the pedestal 104 changes the angular position of the IMU 108. This introduces a difficulty in being able to match the attitude of the ARU102 (and in particular, the attitude of the IMU 108) to the attitude of the dedicated INS 112.

Additionally, when the system is initialized, the IMU 108 and INS 112 may be out of alignment. This initial misalignment will need to be corrected.

Additionally, when the IMU 108 is mounted to the antenna 106 or other portion of the antenna equipment, it is likely mounted differently than how the INS 112 is mounted to the platform 110. This will cause additional difficulties as the attitudes of the IMU 108 and INS 112 may be misaligned, even when the antenna 106 and the platform 110 are in attitude alignment, due to the different mounting.

However, as noted previously, compensation systems may be implemented to compensate for the rotation rate bias of the IMU 108, initial equipment attitude misalignment, and the attitude differences between the IMU 108 and INS 112 due to mounting issues. In particular, Figure 1 illustrates a computing system 114 implemented at the antenna reference unit 102. The computing system 114 is able to receive the change in angular rotation rate information from the IMU 108 as well as the navigation grade angular position information from the INS 112. For example, the computing system 114 may include a modem or other communication hardware that is able to receive data from the IMU 108 and to receive data from the INS 112 that is transmitted to the antenna reference unit 102.

The computing system 114 is then able to apply various corrections resulting from measured rotation rate bias offsets (to correct for rotation rate bias), initial condition attitude mismatches, and full attitude mismatching, which are eventually used to slave the attitude of the IMU 108 to the attitude of the INS 112. That is, the computing system 114 is able to compensate for rotation rate bias of the IMU 108, initial condition attitude mismatches, and attitude mismatches due to the differences in mounting of the IMU 108 and the INS 112. Additionally, the computing system 114 may be able to use movement of the platform 110, and even potentially movement of the antenna reference unit 102. Indeed, it should be appreciated that the antenna reference unit 102 is not necessarily in a static location, but rather can move relative flexure between the mounting location of the antenna equipment and the mounting location of the platform (aircraft) INS 110. Furthermore in some implementations the IMU 108 of the ARU 102 may be mounted on the antenna reflector rather than on a fixed location on the platform 110.

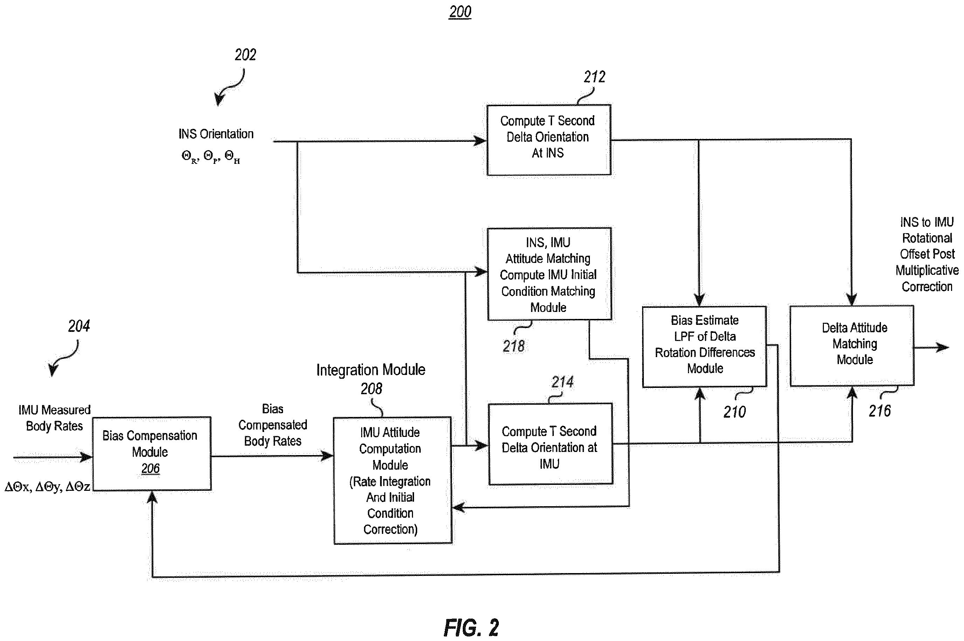

Referring now to Figure 2, an example system 200, implemented in the computing system 114 is illustrated.

At 202, navigation grade attitude data is received from the INS 112. As shown in the illustrated example, the data is received as navigation grade angular position data for angles of roll, pitch, and heading: $\theta_R$, $\theta_P$, and $\theta_H$ respectively. At 204, measured angular rotation rates are received reporting on rate of rotation changes in X, Y and Z axes: $\Delta\theta_X$, $\Delta\theta_Y$, and $\Delta\theta_Z$ respectively.

Figure 2 illustrates a bias compensation module 206 which receives as input the measured angular rotation rates $\Delta\theta_X$, $\Delta\theta_Y$, and $\Delta\theta_Z$. As will be discussed in more detail below, the bias compensation module 206 is able to compensate for the rate bias of the measured rotation rates from the IMU 108. This is particularly important as these biases can be exacerbated as other processes are performed. In particular, the system 200 includes an integration module 208. The integration module 208 is used to compute an absolute attitude of the IMU 108 by integrating the IMU measured rotation rates over time. If there is a bias on these measured rotation rates, then that bias will be amplified, and will continue to grow as iterative integration is performed by the integration module 208. Thus, for example, if the rotation rates provided by the IMU 108 have a bias of 0.1° per minute, in 10 minutes, the error will be amplified to 1°. This can result in a serious error and misalignment in these types of systems. Thus, the bias compensation module 206 removes this bias to prevent amplification by the integration module 208.

As will be discussed in more detail below, the bias compensation module 206 determines how much correction to apply to the rotation rates provided by the IMU 108 based on a bias estimate determined by a rotational difference module 210 which estimates a rotational difference between the INS 112 and the IMU 108. As will be discussed in more detail below, the inputs are an amount of rotation that occurred after the same T seconds for the INS 112 and the IMU. A low frequency difference in rotation will identify a bias. The rotational difference module 210, in the illustrated example, further includes a low-pass filter to isolate the rotational differences that are caused by a bias, resulting in a slowly changing rotational difference between the INS 112 and the IMU from rotational differences existing for other reasons, such a sudden attitude changes for the INS 112. That is, the bias estimate is determined based on an output of a low-pass filter (the output therefore being caused by slowly changing differences) of rotational differences between the INS attitude and the IMU attitude. The output of the rotational difference module 210 is provided to the bias compensation module 206, which can remove the bias from the data provided by the IMU at 204.

Working backwards from the bias estimate module 210, the inputs to the bias estimate module 210 are the outputs from computed orientations of the INS T second delta orientation module 212 and the IMU T second delta orientation module 214. Figure 2 illustrates the INS T second delta orientation module 212 which computes the change in orientation of the INS after T seconds. The IMU T second delta orientation module 214 computes the change in orientation of the IMU after T seconds.

Note that the T seconds should be the same T seconds. However, for various reasons, INS data is often delayed as compared to IMU data. In other words, the INS has a latency when compared to the IMU. Indeed, this latency is one of the reasons a dedicated IMU may be needed so as to provide faster response for antenna equipment. As such, in some embodiments, data from the IMU is buffered, and the latency is determined. To compute the bias estimate, previously captured samples of IMU data corresponding to currently captured INS data may need to be compared. That is, a latency (for example in terms of time, which may correspond to a predetermined number of samples) may need to be determined, and sample matching performed to ensure that samples from the INS and IMU correspond to each other for the actual time when the result of the samples was caused (i.e., by INS or IMU rotation), rather than the time when the samples were taken.

Note further that the output from the INS T second delta orientation module 212 and the output from the INS T second delta orientation module 214 are provided to the delta attitude matching module 216 which generates the signals needed to be provided to the controls 116 to cause the attitude of the IMU 108 to match the attitude of the INS 112. That is, the delta attitude matching module 216 can be used to slave the IMU attitude to the INS attitude. In this case, no low pass filter need be applied. Indeed, in some embodiments, a high pass filter can be applied in the delta attitude matching module 216 to filter out rotational differences caused by the bias.

Returning once again to Figure 2, Figure 2 illustrates an initial condition computation module 218. The initial condition computation module 218 receives as input the INS orientation information input at 202 as well as the IMU orientation information as computed by the integration module 208 operating on the measured rotation rates from the IMU illustrated at 204. This allows the system 200 to compute the difference between the initial orientations of the INS and the IMU. As noted, this difference can be caused by differences in orientation at startup, as well as differences in orientation due to disparities when mounting the INS on the platform and the IMU on the antenna. This difference information can be fed back to the integration module 208 to correct for the initial differences between the attitude of the IMU 108 and the INS 112.

The following now illustrates various algorithms that are implemented by the modules of the system 200 illustrated above.

The following illustrates an algorithm that can be implemented by the integration module 208:

$$q_{IMU_i} = q_{IMU_{i-1}} \begin{vmatrix} a_c \\ a_s \Delta\theta_X \\ a_s \Delta\theta_Y \\ a_s \Delta\theta_Z \end{vmatrix}$$

$$\sigma = \sqrt{\Delta\theta_X^2 + \Delta\theta_Y^2 + \Delta\theta_Z^2}$$

$$a_c = \cos\left(\frac{\sigma}{2}\right)$$

$$a_s = \frac{\sin\left(\frac{\sigma}{2}\right)}{\sigma} \text{ if } \sigma \neq 0$$

$$a_s = \frac{1}{2} \text{ if } \sigma = 0$$

$\Delta\theta_X$ is the IMU measured delta angle measured around the X axis, $\Delta\theta_Y$ is the IMU measured delta angle measured around the Y axis, and $\Delta\theta_Z$ is the IMU measured delta angle measured around the Z axis.

$\sigma$ is the eigenaxis rotation angle of the unit quaternion, $q_{IMUi}$.

$q_{IMUi}$ is the output of the integration module 208.

In particular, this illustrates an algorithm that can be used to update the rotation of the IMU. Note that the algorithm is performed as an iterative loop where each sample from the IMU is placed into this algorithm and the change from the existing IMU is determined from the resulting rotation. The module 208 is Initialized to a quaternion of [ 1, 0, 0,0].

The following illustrates an algorithm performed by the bias compensation module 206. As illustrated in the algorithm, inputs are received from the rotational difference module 210. For example, $\Delta\theta_{LPFx}$, $\Delta\theta_{LPFy}$, and $\Delta\theta_{LPFz}$ are outputs from the rotational difference module 210.

$$\begin{bmatrix} \beta_x \\ \beta_y \\ \beta_z \end{bmatrix} = \begin{bmatrix} \beta_x + \dfrac{a_s}{\tau_4}(\Delta\theta_X - \Delta\theta_{LBFx}) \\ \beta_y + \dfrac{a_s}{\tau_4}(\Delta\theta_Y - \Delta\theta_{LBFy}) \\ \beta_z + \dfrac{a_s}{\tau_4}(\Delta\theta_Z - \Delta\theta_{LBFz}) \end{bmatrix}$$

β, the filtered difference, is applied to update the bias value for the next time through the loop.

Eventually the actual bias value of the gyroscope (which varies from turn on to turn on) is determined.

The various instances of τ are settable scale factors that determine how fast attitude matching between the INS and IMU converge, where faster convergence can be traded for accuracy.

The following illustrates the algorithms used to apply rotational adjustments between the INS and IMU that is computed by the attitude matching module 216, which implements an alignment filter. As illustrated, inputs are received from the INS T second delta orientation module 212 and the IMU T second delta orientation module 214. In particular, $\Delta\theta_{INSx}$, $\Delta\theta_{INSy}$, and $\Delta\theta_{INSz}$ are the outputs from the INS T second delta orientation module 212 and $\Delta\theta_{IMUx}$, $\Delta\theta_{IMUy}$, and $\Delta\theta_{IMUz}$ are the outputs from the IMU T second delta orientation module 214.

$$\vec{V}_{IMU} = \begin{bmatrix} a_s\Delta\theta_X \\ a_s\Delta\theta_Y \\ a_s\Delta\theta_Z \end{bmatrix}$$

$$\vec{V}_{INS} = \begin{bmatrix} a_s\Delta\theta_{INSx} \\ a_s\Delta\theta_{INSy} \\ a_s\Delta\theta_{INSz} \end{bmatrix} \Leftrightarrow \begin{bmatrix} a_c \\ a_s\Delta\theta_{INSx} \\ a_s\Delta\theta_{INSy} \\ a_s\Delta\theta_{INSz} \end{bmatrix} = Q_{Rot}Q_{INS_{-1}}^{*}Q_{INS0}Q_{Rot}^{*}$$

$$\vec{S}_U = \frac{\vec{V}_{INS}}{\|\vec{V}_{INS}\|} \times \vec{V}_{IMU}$$

$$Q_i = \begin{bmatrix} \sqrt{(1 - 0.25 * (\vec{S}_U{}' * \vec{S}_U)) / \tau_3^2} \\ 0.5(\vec{S}_U(1)) / \tau_3 \\ 0.5(\vec{S}_U(2)) / \tau_3 \\ 0.5(\vec{S}_U(3)) / \tau_3 \end{bmatrix}$$

$Q_{INS-1}$ is the Quaternion of the INS orientation from before the T second delta
$Q_{INS0}$ is the Quaternion of the INS orientation from after the T second delta

$$Q^*_{INS-1} Q_{INS0}$$ is the delta orientation over the T seconds.

"$a_c$" and "$a_s$" are normalization factors to covert from delta INS angles to quaternions. The $a_s$ in the $\vec{V}_{IMU}$ and the "$a_s$" in the $\vec{V}_{INS}$ are different normalization factors computed based on the imu and INS measurements respectively.

$Q_{Rot}$ corrects for boresight errors between the INS and the IMU.

$S_u$ represents the rotational error between INS and the IMU.

The x is the cross product operator. The cross product is used to compute the rotation error between the INS and IMU orientations.

The quaternion $Q_i$ is a partial rotation between the instantaneous measurement of INS and the instantaneous measurement of the IMU. The rotation is $1/\tau_3$ of the total rotation between the two measurements. Cumulating many $Q_i$ partial rotations over a series of many measurements behaves as a low pass filter. The cumulated $Q_i$'s should converge a low pass filtered estimate of the orientation difference between the IMU and the INS.

$Q_{Rot}$ is the accumulation of $Q_i$ values. It forms a low pass filtered estimate of the rotational difference (alignment error) between the IMU and the INS.

These algorithms have the ability to automatically align the IMU body frame to the INS body frame. Note the $Q_{Rot}$ is the rotation between the INS and IMU.

It should be noted that in one embodiment, the coordinate system is setup for these algorithms so that the body frame of the INS is matched to the body frame of the IMU. Not the other way around. The result is that the IMU output and the INS output will not match exactly as they do in other systems. In the same coordinate system they would match exactly but since they are not in the same coordinate system they do not match.

The resulting impact is that as the IMU frame aligns with the INS frame such that the pointing vector will match the IMU frame.

The alignment filter is particularly novel. In some embodiments, the filter includes the ability to create a matrix between the IMU and the INS.

The alignment filter requires motion in order to converge and will converge faster under extreme motion of the INS and/or IMU.

The following illustrates additional algorithms performed by the module 218. Note that this allows for utilizing just quaternion rotations without the need to move back and forth between quaternion values and Euler angles.

$$q_{IMU_i} = q_{IMU_{i-1}} \begin{vmatrix} a_c \\ a_s \Delta\theta_X \\ a_s \Delta\theta_Y \\ a_s \Delta\theta_Z \end{vmatrix}$$

Performs propagation of IMU adjustments.
The unit quaternion Qadjust is computed as

$$\begin{bmatrix} q_1 \\ q_2 \\ q_3 \\ q_4 \end{bmatrix} = Q_{adjust} = Q_{INS} Q^*_{Rot} Q^*_{IMU}$$

The product on the right is a quaternion multiplication. $Q_{INS}$ is the INS orientation, $Q_{IMU}$ is the IMU orientation. "*" is the conjugate operation. $Q_{adjust}$ is the instantaneous orientation difference between the IMU and the INS. In the same spirit of forming a "low pass filter", replacing $q_1$ by a number $tau_1$ where $tau_1$ is greater than 1 followed by renormalizing $Q_{adjust}$ then $Q_{adjust}$ would only represent a portion of the orientation difference between $Q_{INS}$ and $Q_{IMU}$ ($Q_{adjust}$ will still rotate about the same axis but by a smaller angle).

$$Q_{adjust} = \begin{bmatrix} Tau_1 \\ q_2 \\ q_3 \\ q_4 \end{bmatrix}$$

$$Q_{adjust} = Q_{adjust}/\|Q_{adjust}\|$$

Calculates the difference between the IMU and the INS, note the coordinate frame is adjusted.

The following shows a second stage of module 218 is a second low pass filter with tuning parameter $tau_2$. At start up, $Q_{bias}$ is initialized as the identity unit quaternion. The output of module 218 is $Q_{bias}$ which is used to correct for errors in the initialization of the IMU (as well as slowing changing IMU integration errors not corrected by the bias correction).

$$Q_{bias} = \begin{bmatrix} \dfrac{q_{adjust1}}{Tau_2} + q_{bias1} \\[1em] \dfrac{q_{adjust2}}{Tau_2} + q_{bias2} \\[1em] \dfrac{q_{adjust3}}{Tau_2} + q_{bias3} \\[1em] \dfrac{q_{adjust4}}{Tau_2} + q_{bias4} \end{bmatrix}$$

Some embodiments are configured to sample the IMU 108 and the INS 112 at least a 20 Hz sample rate.

Alternatively or additionally, some embodiments are configured to sample the IMU 108 and the INS 112 at least 10 Hz, as rates lower than this often require more accurate iMU technology.

In some embodiments, sample rate may be selected based on a determination of the timing jitter. For the example illustrated herein, the timing jitter should within about +/- 30 ms max variation. However, embodiments may be implemented to have a timing jitter that is an order of magnitude lower than that.

Some embodiments have been tested with a difference in latency of roughly 120 ms. However, care should be taken to keep this value to a minimum.

In the algorithms illustrated above, $\tau_1$ is the value that is used to scale the alignment adjust matrix. This can be conceptualized as a direct change to the current values reduced by this factor. In one embodiment, this was selected to be a value of 10.

$\tau_2$ is the value that is used to scale the bias values. This can be conceptualized as an integrator on the difference between the IMU and the INS. In one embodiment, this was selected to be a value of 150.

$\tau_3$ is the value that is used to scale the alignment filter, where the lower the number the faster the alignment. It should be noted that the previous 2 tau values have to complete before this value will actually align. In one embodiment, this was selected to be a value of 8.

$\tau_4$ is the value that is used to scale bias offsets. This should happen later in the process than when other filters are applied so as not to have an impact on the other filters. This value should in general be significantly higher than on any of the other filters. In one embodiment, this was selected to be a value of 1000.

The tau values will have a significant impact on the behavior of the filter and in particular on the timeline. Without high quality data on the timing characteristics of the entire system these values will need to be changeable.

The following illustrate examples of other information that may need to be provided.

Average timing (System) - Number of rotation from the IMU to equal the rotation of the INS. The filter needs to know how many IMU messages need to be averaged and compared with the INS values. It is recommended that embodiments use the number that is closest to the average number of samples measured on the hardware over a long duration.

Average Latency of the INS data (System) - This parameter is settable, and in some embodiments, can be included in the algorithms.

Buffer Size (depends on system latency) - Buffer size is determined based on latency. In particular, a buffer will be needed to store IMU values until current INS values corresponding with buffered IMU values can be used for the algorithms above. Thus, the buffer will need to be sized to collect a sufficient number of IMU samples to allow this to occur.

Thus, embodiments illustrated herein implement a two-term transfer of alignment between a master navigation device (e.g., INS 112) and a slaved navigation device (e.g., IMU 108). One of the terms is applied as a right multiplicative correction and the other as a left multiplicative correction. The two corrections serve different purposes. One correction will align the integrated angular velocities of the two navigation devices and the other will correct for both error in the initial condition of the slave's orientation and additional errors that were introduced by intermediate steps in the alignment prior to convergence of the integrated angular velocities.

While the examples above illustrate using a quaternion representation of attitude, it could also be implemented with direction cosine matrices, or in other appropriate fashions.

Some embodiments can be implemented under the following conditions:
Fixed relative alignment (with an unknown fixed rotational offset error) between master and slave navigation device. This is useful for determining real time misalignment corrections between master and slave navigation devices.

Variable but known relative alignment (with the exception of an unknown rotational offset) between master and slave navigation device. This has application to providing real time corrections to the orientation of a slave navigation device that is moving on a pedestal relative to the master navigation device.

Variable but known relative alignment (with the exception of an unknown rotational offset) between a stationary lab fixture and a slave navigation device. The stationary lab fixture is used as a pseudo master navigation device and the slave navigation device mounted on a moving pedestal is slaved to the fixture's static orientation. This is useful for determining alignment parameters offline in a laboratory environment to precalibrate for the alignment errors.

This approach also has application to slaving to a master navigation device in which the said master navigation device is slowly drifting due to a GPS denied environment. That is, GPS signals may be jammed, blocked, unreadable, or otherwise unavailable. A tracking antenna can provide an outer loop correction to the master navigator's position while the transfer of alignment described above provides an inner loop correction to the relative orientation of the slaved navigation device.

In this way, some embodiments can facilitate the use of mems-based navigation devices as an ARU on a moving platform when a navigation grade INS is located at a remote location on the same platform. This allows for the possibility of known relative motion between the ARU (and in particular the IMU 108) and the INS.

Some embodiments of the invention allow for accurate low beamwidth antenna pointing while using an inexpensive ARU without the utilization of velocity or acceleration measurements. The body frame is often of interest because the origin and the axes remain fixed relative to the aircraft. This means that the relative orientation of the Earth and body frames describes the aircraft attitude Roll Pitch Heading.

The following discussion now refers to a number of methods and method acts that may be performed. Although the method acts may be discussed in a certain order or illustrated in a flow chart as occurring in a particular order, no particular ordering is required unless specifically stated, or required because an act is dependent on another act being completed prior to the act being performed.

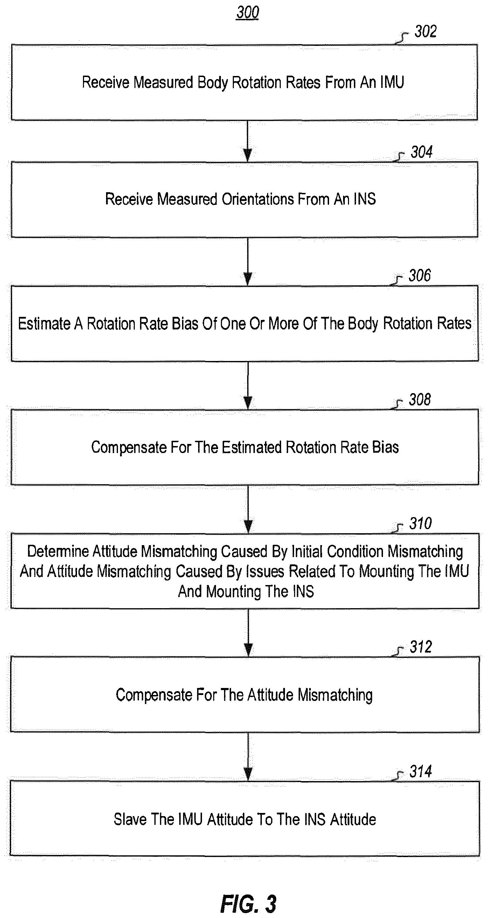

Referring now to Figure 3, a method 300 is illustrated. The method 300 includes acts for matching attitude of an IMU serving as a dedicated antenna reference unit slaved to a master INS mounted at a different location on the same platform.

The method 300 includes receiving measured body rotation rates from the (act 302). An example of this is illustrated at 204 in Figure 2.

The method 300 further includes receiving measured orientations from a platform INS (act 304). An example of this is illustrated at 202 in Figure 2.

The method 300 further includes estimating a rotation rate bias of one or more of the body rotation rates (act 306). This is done by using differences over time between a change in orientation of the IMU determined by integrating the measured body rotation rates and using the integrated measured body rotation rates over time, and a change in orientation of the INS determined using the measured orientations over time. An example of this is illustrated in Figure 2 by the actions of the bias estimation module.

The method 300 further includes compensating for the estimated rotation rate bias (act 308). An example of this is illustrated at the bias compensation module 206.

The method 300 further includes from the measured body rotation rates and the measured orientations, determining attitude mismatching caused by initial condition mismatching and attitude mismatching caused by issues related to mounting the IMU to the ground equipment and mounting the INS to the airborne target (act 310). An example of this is illustrated in Figure 2 where the initial condition computation module 218 performs this functionality.

The method 300 further includes compensating for the attitude mismatching (act 312). Figure 2 illustrates that this can be performed at the integration module 208.

The method 300 further includes slaving the IMU attitude to the INS attitude by controlling the IMU to have changes in attitude of the IMU, as determined by integrating the measured body rotation rates and using the integrated measured body rotation rates over time, match changes in attitude of the INS, as determined by using the measured orientations over time (act 314). Figure 2 illustrates that this can be performed by the attitude matching module 216.

The method 300 may further include buffering the measured body rotation rates from the IMU and using measured body rotation rates that were received previous in time to when the measured orientations from the INS were received to compensate for latency in the INS.

The method 300 may be practiced where the method is performed in a GPS denied environment.

The method 300 may be practiced where the method is performed without matching individual accelerometers between the IMU and INS.

The method 300 may be practiced where one or more instances of compensating for the estimated rotation rate bias is performed prior to integrating the measured body rotation rates.

The method 300 may be practiced where the differences over time used when estimating a rotation rate bias are obtained from a low pass filter. For example, Figure 2 illustrates that a low-pass filter can be used in the bias estimate module 210.

The method 300 may be practiced where the measured body rotation rates from the IMU and the measured orientations from master INS mounted are obtained using sample rates.

The method 300 may be practiced where quaternion representations of attitude are used.

The method 300 may be practiced where direction cosine matrices representations of attitude are used.

Further, the methods may be practiced by a computer system including one or more processors and computer-readable media such as computer memory. In particular, the computer memory may store computer-executable instructions that when executed by one or more processors cause various functions to be performed, such as the acts recited in the embodiments.

Embodiments of the present invention may comprise or utilize a special purpose or general-purpose computer including computer hardware, as discussed in greater detail below. Embodiments within the scope of the present invention also include physical and other computer-readable media for carrying or storing computer-executable instructions and/or data structures. Such computer-readable media can be any available media that can be accessed by a general purpose or special purpose computer system. Computer-readable media that store computer-executable instructions are physical storage media. Computer-readable media that carry computer-executable instructions are transmission media. Thus, by way of example, and not limitation, embodiments of the invention can comprise at least two distinctly different kinds of computer-readable media: physical computer-readable storage media and transmission computer-readable media.

Physical computer-readable storage media includes RAM, ROM, EEPROM, CD-ROM or other optical disk storage (such as CDs, DVDs, etc.), magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmissions media can include a network and/or data links which can be used to carry desired program code means in the form of computer-executable instructions or data structures and which can be accessed by a general purpose or special purpose computer. Combinations of the above are also included within the scope of computer-readable media.

Further, upon reaching various computer system components, program code means in the form of computer-executable instructions or data structures can be transferred automatically from transmission computer-readable media to physical computer-readable storage media (or vice versa). For example, computer-executable instructions or data structures received over a network or data link can be buffered in RAM within a network interface module (e.g., a "NIC"), and then eventually transferred to computer system RAM and/or to less volatile computer-readable physical storage media at a computer system. Thus, computer-readable physical storage media can be included in computer system components that also (or even primarily) utilize transmission media.

Computer-executable instructions comprise, for example, instructions and data which cause a general purpose computer, special purpose computer, or special purpose processing device to perform a certain function or group of functions. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

The present invention may be embodied in other specific forms without departing from its characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

**Claims**

**1.** A method (300) of matching attitude of an IMU (108) used as a dedicated antenna reference unit (102) located at a first location on the platform (110) with the attitude of the platform INS (112) located at a second location on the platform (110), wherein said first location is different from said second location on the platform (110), the method comprising:

receiving measured body rotation rates from an IMU (108);
receiving measured orientations from the INS (112);
estimating a rotation rate bias of one or more of the body rotation rates by using differences over time between a change in orientation of the IMU (108) determined by integrating the measured body rotation rates and using the integrated measured body rotation rates over time; and a change in orientation of the INS (112) determined using the measured orientations over time;
compensating for the estimated rotation rate bias;
from an orientation of the IMU (108) determined from the measured body rotation rates and the measured orientations of the INS (112), determining attitude mismatching caused by initial condition mismatching and attitude mismatching caused by issues related to mounting the IMU (108) relative to the INS (112);
compensating for the attitude mismatching; and
slaving the IMU (108) attitude to the INS (112) attitude by controlling the IMU (108) to have changes in attitude of the IMU (108), as determined by integrating the measured body rotation rates and using the integrated measured body rotation rates over time, match changes in attitude of the INS (112), as determined by using the measured orientations over time.

**2.** The method of claim 1, further comprising buffering the measured body rotation rates from the IMU (108) and using measured body rotation rates that were received previous in time to when the measured orientations from the INS (112) were received to compensate for latency in the INS (112).

**3.** The method of claim 1, wherein the method is performed in a GPS denied environment.

4. The method of claim 1, wherein the method is performed without matching individual accelerometers between the IMU (108) and INS (112).

5. The method of claim 1, wherein one or more instances of compensating for the estimated rotation rate bias is performed prior to integrating the measured body rotation rates.

6. The method of claim 1, wherein the differences over time used when estimating a rotation rate bias are obtained from a low pass filter.

7. The method of claim 1, wherein the measured body rotation rates from the IMU (108) and the measured orientations from the INS (112) are obtained using sample rates of at least 10 Hz.

8. A system for matching attitude of an IMU (108) with attitude of an INS (112), the system comprising:

a bias compensation module (206) configured to receive measured body rotation rates from an IMU (108) and to compensate for bias on received measured body rotation rates;
an INS T second delta orientation module (212) configured to receive measured orientations from a platform INS (112), and configured to compute changes in orientation of the INS (112) over time of the measured orientations;
an integration module (208) coupled to the bias compensation module (206), and configured to receive bias compensated body rotation rates from the bias compensation module; and further configured to integrate the bias compensated body rotation rates over time;
an IMU T second delta orientation module (214) coupled to the integration module (208), configured to receive integrated results from the integration module (208), and further configured to compute measured changes in orientation over time of the IMU (108) using the integrated results;
a rotational difference module (210) coupled to the INS T second delta orientation module (212) to receive the measured changes in orientation of the INS (112) and the IMU T second delta orientation module (214) to receive the measured changes in orientation of the IMU (108), wherein the rotational difference module (210) is configured to estimate a rotation rate bias of one or more of the body rotation rates by using the measured changes in orientation of the INS (112) and the measured changes in orientation of the IMU (108);
wherein the rotational difference module (210) is coupled to the bias compensation module (206), such that the bias compensation module (206) uses the estimated rotation rate bias to compensate for the estimated rotation rate bias;
an initial condition computation module (218) coupled to the integration module (208), and configured to receive the measured orientations from the INS (112) and orientations of the IMU (108) from the integration module (208), wherein the initial condition computation module (218) is configured to determine attitude mismatching between the IMU (108) and INS (112) caused by initial condition mismatching ;
wherein the initial condition computation module (218) is coupled to the integration module (208), and wherein the integration module (208) is configured to compensate for the initial condition mismatching;
an attitude matching module (216) coupled to the INS T second delta orientation module (212) to receive the measured changes in orientation of the INS (112) and the IMU T second delta orientation module (214) to receive the measured changes in orientation of the IMU (108), the attitude matching module (216) configured to compensate for mounting mismatching between the IMU (108) and INS (112) caused by issues related to mounting the IMU (108) and mounting the INS (112), and to slave the IMU (108) attitude to the INS (112) attitude; and
wherein the IMU (108) is located at a first location on a platform (110) and INS (112) is located at a second location on the platform (110), wherein said first location is different from said second location on the platform (110).

9. The system of claim 8, further comprising a buffer coupled to the bias compensation module (206), and configured to buffer the measured body rotation rates from the IMU (108) such that measured body rotation rates that were received previous in time to when the measured orientations from the INS (112) were received can be used to compensate for latency in the INS (112).

10. The system of claim 8, wherein the rotational difference module (210) comprises a low pass filter such that differences over time used when estimating a rotation rate bias are obtained from the low pass filter.

**Patentansprüche**

1. Ein Verfahren (300) zum Anpassen der Ausrichtung einer IMU (108), die als dedizierte Antennenreferenzeinheit (102) verwendet wird und sich an einem ersten Ort auf der Plattform (110) befindet, an die Lage des Plattform-INS (112), das sich an einem zweiten Ort auf der Plattform (110) befindet, wobei sich der erste Ort von dem zweiten Ort auf der Plattform (110) unterscheidet, wobei das Verfahren umfasst:

   Empfangen von gemessenen Körperdrehzahlen von einer IMU (108);
   Empfangen der gemessenen Orientierungen vom INS (112);
   Schätzen einer Drehratenverzerrung einer oder mehrerer der Körperdrehraten durch Verwendung von Unterschieden über die Zeit zwischen einer Änderung der Ausrichtung der IMU (108), die durch Integrieren der gemessenen Körperdrehzahlen und Verwenden der integrierten gemessenen Körperdrehzahlen über die Zeit bestimmt wird; und einer Änderung der Ausrichtung des INS (112), die unter Verwendung der gemessenen Ausrichtungen über die Zeit bestimmt wird;
   Ausgleichen der geschätzten Verzerrung der Drehzahl;
   Bestimmen aus einer Orientierung der IMU (108), die aus den gemessenen Körperdrehzahlen und den gemessenen Orientierungen des INS (112) bestimmt wird, der Lagefehlanpassung, die durch eine Fehlanpassung der Anfangsbedingungen verursacht wird, und der Lagefehlanpassung, die durch Probleme im Zusammenhang mit der Montage der IMU (108) relativ zum INS (112) verursacht wird;
   Kompensation der Fehlanpassung der Ausrichtung; und
   Anpassen der Lage der IMU (108) an die Lage des INS (112) durch Steuern der IMU (108), damit Änderungen der Lage der IMU (108), die durch Integrieren der gemessenen Körperdrehzahlen und Verwenden der integrierten gemessenen Körperdrehzahlen über die Zeit bestimmt werden, mit Änderungen der Lage des INS (112) übereinstimmen, die durch Verwenden der gemessenen Ausrichtungen über die Zeit bestimmt werden.

2. Das Verfahren nach Anspruch 1, das ferner das Puffern der gemessenen Körperdrehzahlen von der IMU (108) und die Verwendung gemessener Körperdrehzahlen, die zeitlich vor dem Empfang der gemessenen Orientierungen vom INS (112) empfangen wurden, umfasst, um eine Latenz im INS (112) zu kompensieren.

3. Das Verfahren nach Anspruch 1, wobei das Verfahren in einer Umgebung ohne GPS durchgeführt wird.

4. Das Verfahren nach Anspruch 1, wobei das Verfahren ohne Abgleich einzelner Beschleunigungsmesser zwischen der IMU (108) und dem INS (112) durchgeführt wird.

5. Das Verfahren nach Anspruch 1, wobei eine oder mehrere Kompensationen der geschätzten Körperdrehzahlen-Verzerrung vor der Integration der gemessenen Körperdrehzahlen durchgeführt werden.

6. Das Verfahren nach Anspruch 1, wobei die zeitlichen Differenzen, die bei der Schätzung einer Körperdrehzahlen-Verzerrung verwendet werden, aus einem Tiefpassfilter gewonnen werden.

7. Das Verfahren nach Anspruch 1, wobei die gemessenen Körperdrehzahlen von der IMU (108) und die gemessenen Orientierungen vom INS (112) unter Verwendung von Abtastraten von mindestens 10 Hz erhalten werden.

8. Ein System zur Anpassung der Lage einer IMU (108) an die Lage eines INS (112), wobei das System Folgendes umfasst:

   ein Verzerrungskompensationsmodul (206), das so konfiguriert ist, dass es gemessene Körperdrehzahlen von einer IMU (108) empfängt und eine Verzerrung der empfangenen gemessenen Körperdrehzahlen kompensiert;
   ein INS T zweites Delta-Orientierungsmodul (212), das so konfiguriert ist, dass es gemessene Orientierungen von einem Plattform-INS (112) empfängt, und so konfiguriert ist, dass es Änderungen der Orientierung des INS (112) über die Zeit der gemessenen Orientierungen berechnet;
   ein Integrationsmodul (208), das mit dem Vorspannungskompensationsmodul (206) gekoppelt und so konfiguriert ist, dass es vorspannungskompensierte Körperrotationsraten von dem Vorspannungskompensationsmodul empfängt; und
   ferner so konfiguriert ist, dass es die vorspannungskompensierten Körperrotationsraten über die Zeit integriert;
   ein IMU T zweites Delta-Orientierungsmodul (214), das mit dem Integrationsmodul (208) gekoppelt ist, konfiguriert ist, um integrierte Ergebnisse von dem Integrationsmodul (208) zu empfangen, und ferner konfiguriert ist, um gemessene Änderungen in der Orientierung über die Zeit der IMU (108) unter Verwendung der integrierten Ergebnisse zu berechnen;

ein Rotationsdifferenzmodul (210), das mit dem zweiten Delta-Orientierungsmodul (212) des INS T gekoppelt ist, um die gemessenen Orientierungsänderungen des INS (112) zu empfangen, und das zweite Delta-Orientierungsmodul (214) der IMU T, um die gemessenen Orientierungsänderungen der IMU (108) zu empfangen, wobei das Rotationsdifferenzmodul (210) so konfiguriert ist, dass es eine Körperdrehzahlen-Verzerrung einer oder mehrerer der Körperdrehzahlen unter Verwendung der gemessenen Orientierungsänderungen des INS (112) und der gemessenen Orientierungsänderungen der IMU (108) schätzt;

wobei das Rotationsdifferenzmodul (210) mit dem Verzerrungsausgleichsmodul (206) gekoppelt ist, so dass das Verzerrungsausgleichsmodul (206) die geschätzte Körperdrehzahlen-Verzerrung verwendet, um die geschätzte Körperdrehzahlen-Verzerrung zu kompensieren;

ein Modul (218) zur Berechnung des Anfangszustands, das mit dem Integrationsmodul (208) gekoppelt und so konfiguriert ist, dass es die gemessenen Orientierungen von dem INS (112) und die Orientierungen der IMU (108) von dem Integrationsmodul (208) empfängt, wobei das Modul (218) zur Berechnung des Anfangszustands so konfiguriert ist, dass es eine Fehlanpassung der Lage zwischen der IMU (108) und dem INS (112) bestimmt, die durch eine Fehlanpassung des Anfangszustands verursacht wird;

wobei das Modul (218) zur Berechnung der Anfangsbedingungen mit dem Integrationsmodul (208) gekoppelt ist, und wobei das Integrationsmodul (208) so konfiguriert ist, dass es die Fehlanpassung der Anfangsbedingungen kompensiert;

ein Lageanpassungsmodul (216), das mit dem zweiten Delta-Orientierungsmodul (212) von INS T gekoppelt ist, um die gemessenen Änderungen in der Orientierung des INS (112) zu empfangen, und das zweite Delta-Orientierungsmodul (214) von IMU T, um die gemessenen Änderungen in der Orientierung der IMU (108) zu empfangen, wobei das Lageanpassungsmodul (216) so konfiguriert ist, dass es eine Montagefehlanpassung zwischen der IMU (108) und INS (112) kompensiert, die durch Probleme im Zusammenhang mit der Montage der IMU (108) und der Montage des INS (112) verursacht wird, und dass es die Lage der IMU (108) an die Lage des INS (112) anpasst; und

wobei sich die IMU (108) an einer ersten Stelle auf einer Plattform (110) befindet und sich das INS (112) an einer zweiten Stelle auf der Plattform (110) befindet, wobei die erste Stelle von der zweiten Stelle auf der Plattform (110) verschieden ist.

9. Das System nach Anspruch 8, das ferner einen Puffer umfasst, der mit dem Bias-Kompensationsmodul (206) gekoppelt und so konfiguriert ist, dass er die gemessenen Körperrotationsraten von der IMU (108) puffert, so dass gemessene Körperdrehzahlen, die zeitlich vor dem Empfang der gemessenen Orientierungen vom INS (112) empfangen wurden, verwendet werden können, um eine Latenz im INS (112) zu kompensieren.

10. Das System nach Anspruch 8, wobei das Rotationsdifferenzmodul (210) einen Tiefpassfilter umfasst, so dass die bei der Schätzung einer Körperdrehzahlen-Verzerrung verwendeten zeitlichen Differenzen aus dem Tiefpassfilter gewonnen werden.

**Revendications**

1. Une méthode (300) pour faire correspondre l'attitude d'un IMU (108) utilisé comme unité de référence d'antenne dédiée (102) situé à un premier emplacement sur la plate-forme (110) avec l'attitude de l'INS de la plate-forme (112) situé à un deuxième emplacement sur la plate-forme (110), dans laquelle ledit premier emplacement est différent dudit deuxième emplacement sur la plate-forme (110), la méthode comprenant:

recevoir les taux de rotation du corps mesurés à partir d'une UMI (108);
recevoir les orientations mesurées de l'INS (112);
l'estimation d'un biais de taux de rotation d'un ou de plusieurs des taux de rotation du corps en utilisant les différences dans le temps entre un changement d'orientation de l'IMU (108) déterminé en intégrant les taux de rotation du corps mesurés et en utilisant les taux de rotation du corps mesurés intégrés dans le temps; et un changement d'orientation de l'INS (112) déterminé à l'aide des orientations mesurées dans le temps;
en compensant le biais du taux de rotation estimé;
à partir d'une orientation de l'UMI (108) déterminée à partir des taux de rotation du corps mesurés et des orientations mesurées de l'INS (112), déterminer la non-concordance d'attitude causée par la non-concordance des conditions initiales et la non-concordance d'attitude causée par des problèmes liés au montage de l'UMI (108) par rapport à l'INS (112);
compenser le décalage d'attitude; et

asservir l'attitude de l'IMU (108) à l'attitude de l'INS (112) en contrôlant l'IMU (108) pour que les changements d'attitude de l'IMU (108), déterminés en intégrant les taux de rotation du corps mesurés et en utilisant les taux de rotation du corps mesurés intégrés dans le temps, correspondent aux changements d'attitude de l'INS (112), déterminés en utilisant les orientations mesurées dans le temps.

2. La méthode de la revendication 1, comprenant en outre la mise en mémoire tampon des taux de rotation du corps mesurés par l'IMU (108) et l'utilisation des taux de rotation du corps mesurés qui ont été reçus avant le moment où les orientations mesurées par l'INS (112) ont été reçues pour compenser la latence dans l'INS (112).

3. La méthode de la revendication 1, dans laquelle la méthode est exécutée dans un environnement interdit au GPS.

4. La méthode de la revendication 1, dans laquelle la méthode est exécutée sans faire correspondre les accéléromètres individuels entre l'IMU (108) et l'INS (112).

5. La méthode de la revendication 1, dans laquelle une ou plusieurs instances de compensation du biais de la vitesse de rotation estimée sont effectuées avant l'intégration des vitesses de rotation mesurées du corps.

6. La méthode de la revendication 1, dans laquelle les différences dans le temps utilisées lors de l'estimation d'un biais de taux de rotation sont obtenues à partir d'un filtre passe-bas.

7. La méthode de la revendication 1, dans laquelle les taux de rotation du corps mesurés par l'IMU (108) et les orientations mesurées par l'INS (112) sont obtenus en utilisant des taux d'échantillonnage d'au moins 10 Hz.

8. Un système pour faire correspondre l'attitude d'un IMU (108) avec l'attitude d'un INS (112), le système comprenant:

un module de compensation de biais (206) configuré pour recevoir des taux de rotation du corps mesurés à partir d'un IMU (108) et pour compenser le biais sur les taux de rotation du corps mesurés reçus;
un module de deuxième orientation delta INS T (212) configuré pour recevoir des orientations mesurées à partir d'une plate-forme INS (112), et configuré pour calculer les changements d'orientation de l'INS (112) au fil du temps des orientations mesurées;
un module d'intégration (208) couplé au module de compensation des biais (206) et configuré pour recevoir les taux de rotation du corps compensés par le module de compensation des biais; et configuré en outre pour intégrer les taux de rotation du corps compensés par les biais dans le temps;
un module de deuxième orientation delta IMU T (214) couplé au module d'intégration (208), configuré pour recevoir des résultats intégrés du module d'intégration (208), et configuré en outre pour calculer les changements d'orientation mesurés dans le temps de l'IMU (108) à l'aide des résultats intégrés;
un module de différence de rotation (210) couplé au module d'orientation du second delta de l'INS T (212) pour recevoir les changements d'orientation mesurés de l'INS (112) et au module d'orientation du second delta de l'IMU T (214) pour recevoir les changements d'orientation mesurés de l'IMU (108), dans lequel le module de différence de rotation (210) est configuré pour estimer un biais de taux de rotation d'un ou de plusieurs taux de rotation du corps en utilisant les changements d'orientation mesurés de l'INS (112) et les changements d'orientation mesurés de l'IMU (108);
le module de différence de rotation (210) est couplé au module de compensation de biais (206), de sorte que le module de compensation de biais (206) utilise le biais de taux de rotation estimé pour compenser le biais de taux de rotation estimé;
un module de calcul des conditions initiales (218) couplé au module d'intégration (208) et configuré pour recevoir les orientations mesurées du SIN (112) et les orientations de l'UMI (108) du module d'intégration (208), le module de calcul des conditions initiales (218) étant configuré pour déterminer la discordance d'attitude entre l'UMI (108) et le SIN (112) causée par la discordance des conditions initiales;
le module de calcul des conditions initiales (218) est couplé au module d'intégration (208), et le module d'intégration (208) est configuré pour compenser l'inadéquation des conditions initiales;
un module d'adaptation d'attitude (216) couplé au module d'orientation du second delta de l'INS T (212) pour recevoir les changements d'orientation mesurés de l'INS (112) et au module d'orientation du second delta de l'IMU T (214) pour recevoir les changements d'orientation mesurés de l'IMU (108), le module d'adaptation d'attitude (216) étant configuré pour compenser la non-concordance de montage entre l'IMU (108) et l'INS (112) causée par des problèmes liés au montage de l'IMU (108) et au montage de l'INS (112), et pour asservir l'attitude de l'IMU (108) à l'attitude de l'INS (112); et
dans lequel l'IMU (108) est situé à un premier emplacement sur une plate-forme (110) et l'INS (112) est situé à un deuxième emplacement sur la plate-forme (110), ledit premier emplacement étant différent dudit deuxième emplacement sur la plate-forme (110).

9. Le système de la revendication 8, comprenant en outre un tampon couplé au module de compensation de biais (206) et configuré pour mettre en mémoire tampon les taux de rotation du corps mesurés à partir de l'IMU (108) de sorte que les taux de rotation du corps mesurés qui ont été reçus avant la réception des orientations mesurées à partir de l'INS (112) peuvent être utilisés pour compenser la latence dans l'INS (112).

10. Le système de la revendication 8, dans lequel le module de différence de rotation (210) comprend un filtre passe-bas de sorte que les différences dans le temps utilisées lors de l'estimation d'un biais de vitesse de rotation sont obtenues à partir du filtre passe-bas.

Target
120

Pedestal
104

Antenna
106

IMU
108

ARU
102

Computing
System
114

INS
112

Platform
110

*FIG. 1*

*200*

*202*

INS Orientation
$\Theta_R, \Theta_P, \Theta_H$

*212*

Compute T Second
Delta Orientation
At INS

INS, IMU
Attitude Matching
Compute IMU Initial
Condition Matching
Module

*218*

INS to IMU
Rotational
Offset Post
Multiplicative
Correction

Bias Estimate
LPF of Delta
Rotation Differences
Module

Delta Attitude
Matching
Module

*210*

*216*

*204*

IMU Measured
Body Rates

$\Delta\Theta x, \Delta\Theta y, \Delta\Theta z$

Bias Compensation
Module
*206*

Bias
Compensated
Body Rates

Integration Module
*208*

IMU Attitude
Computation
Module
(Rate Integration
And Initial
Condition
Correction)

*214*

Compute T Second
Delta Orientation at
IMU

*FIG. 2*

EP 4 001 850 B1

18

_300_

302

Receive Measured Body Rotation Rates From An IMU

304

Receive Measured Orientations From An INS

306

Estimate A Rotation Rate Bias Of One Or More Of The Body Rotation Rates

308

Compensate For The Estimated Rotation Rate Bias

310

Determine Attitude Mismatching Caused By Initial Condition Mismatching And Attitude Mismatching Caused By Issues Related To Mounting The IMU And Mounting The INS

312

Compensate For The Attitude Mismatching

314

Slave The IMU Attitude To The INS Attitude

FIG. 3

**EP 4 001 850 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2927744 A